# DEMANDE DE BREVET EUROPEEN

(11) **EP 3 756 456 A2**
(43) Date de publication de la demande: **30.12.2020**
(21) Numéro de dépôt: 20182668.2
(22) Date de dépôt: 26.06.2020
(51) Int. Cl.: A01K 1/02, H05B 3/14, H05B 3/26

(54) **DISPOSITIF DE CHAUFFAGE RADIANT POUR ÉLEVAGE PORCIN**

(30) Priorité: 27.06.2019 FR 1907025
(71) Demandeur: VERELEC, 38950 St Etienne de St Geoirs (FR)
(72) Inventeur: JOUBERT, Frédéric, 38260 Saint-Hilaire-de-la-Côte (FR)
(74) Mandataire: Dumont, Alban

(57) **Abrégé**

Dispositif de chauffage radiant (10) adapté à un élevage porcin, notamment pour un élevage de porcelets (12), le dispositif de chauffage radiant (10) comprenant un corps de chauffe (16) configuré pour être raccordé à une source d'alimentation électrique (11) et pour émettre un rayonnement de chauffe (162) au moins en partie dans le domaine infrarouge lorsque le corps de chauffe (16) est alimenté en électricité par la source d'alimentation électrique (11), l'émission du rayonnement de chauffe (162) se pratiquant selon un champ sensiblement directionnel dirigé selon une direction principale, le rayonnement de chauffe (162) ayant la faculté de chauffer l'intérieur de la chair d'un porcelet (12) au moins en partie positionné dans le champ du rayonnement de chauffe (162).

## Description

### DOMAINE TECHNIQUE

La présente invention concerne un dispositif de chauffage radiant adapté à un élevage porcin, notamment pour un élevage de porcelets.

La présente invention concerne également une niche pour élevage de porcelets comprenant un tel dispositif de chauffage radiant.

### ETAT DE LA TECHNIQUE ANTERIEURE

Dans le domaine de l'élevage porcin, pour maximiser les rendements de l'élevage des porcelets, il est notamment nécessaire que le taux de conversion de la nourriture ingérée en viande soit maximal.

Dans un exemple de maximisation de rendement d'élevage de porcelets, afin de faire prendre de la masse musculaire au porcelet et pour qu'il s'engraisse rapidement, il est impératif que le porcelet n'ait pas froid afin qu'il convertisse au minimum la nourriture qu'il ingère en chaleur pour se réchauffer.

Une solution à ce problème consiste à chauffer les porcelets avec des ampoules chauffantes.

Cette méthode n'est malheureusement pas optimale, d'abord parce que les ampoules chauffantes ont un faible rendement thermique (rapport entre la chaleur générée et l'électricité consommée).

Un premier inconvénient supplémentaire provient de la nature du rayonnement émis par ces ampoules chauffantes, dont la longueur d'onde est inférieure à 1 micromètre. Un tel rayonnement chauffe uniquement la surface de la peau du porcelet exposé. Ainsi, outre le fait qu'il n'est pas chauffé à l'intérieur de son corps ce qui l'oblige à convertir une partie de la nourriture ingérée à cet effet, cela risque même d'occasionner des gênes voire des brulures sur leur peau.

Un autre inconvénient vient du fait que le rayonnement ainsi émis par les ampoules chauffantes atteint également la truie contre laquelle le porcelet évolue. Ceci est dommageable car les truies s'épanouissent mieux dans des environnements présentant des températures plus fraîches.

Par ailleurs, une méthode efficace pour engraisser chaque porcelet à partir d'un certain âge consiste à le mettre dans une niche d'élevage dans laquelle il reste durant sa période d'engraissage. Mais cette pratique est susceptible d'être traumatisante pour le porcelet.

Une solution pour améliorer l'indice de consommation peut consister à améliorer le confort des porcelets. Mais il n'est pas évident d'arriver à ce résultat car ils sont fréquemment élevés dans des espaces restreints fermés, de telles conditions nuisant naturellement au bien-être des porcelets et des porcs de manière plus générale.

Même si les problématiques présentées ci-avant concernent essentiellement les porcelets, elles peuvent toucher les porcs qui ont parfois besoin de moyens de chauffage également.

### EXPOSE DE L'INVENTION

La présente invention a pour but de proposer une solution de chauffage radiant pour élevage porcin répondant à tout ou partie des inconvénients présentés ci-avant et notamment :
- fournir une solution pouvant procurer au porc chauffé un certain bien-être, notamment pour le porcelet durant les périodes où il vit au contact de la truie ;
- proposer une solution procurant un certain bien-être au porcelet lorsqu'il évolue dans une niche d'élevage ;
- proposer une solution de chauffage durant la période de post sevrage c'est-à-dire l'adolescence du porcelet.
- proposer une solution pour obtenir un taux de transformation autrement appelé indice de consommation de viande le plus élevé possible ;
- proposer une solution limitant les nuisances pour les truies ;
- proposer une solution ayant le meilleur rendement énergétique possible et une consommation électrique la plus faible possible.

A cet effet, il est proposé un dispositif de chauffage radiant adapté à un élevage porcin, notamment pour un élevage de porcelets, le dispositif de chauffage radiant comprenant un corps de chauffe configuré pour être raccordé à une source d'alimentation électrique et pour émettre un rayonnement de chauffe au moins en partie dans le domaine infrarouge lorsque le corps de chauffe est alimenté en électricité par la source d'alimentation électrique, l'émission du rayonnement de chauffe se pratiquant selon un champ sensiblement directionnel dirigé selon une direction principale, le rayonnement de chauffe ayant la faculté de chauffer l'intérieur de la chair d'un porcelet au moins en partie positionné dans le champ du rayonnement de chauffe.

Le dispositif de chauffage radiant peut mettre en œuvre les caractéristiques suivantes avantageuses, prises isolément ou en combinaison.

Dans une mise en oeuvre du dispositif de chauffage radiant, le corps de chauffe est configuré de sorte que le champ du rayonnement de chauffe est contenu dans un angle d'émission de 60°.

Dans une mise en œuvre du dispositif de chauffage radiant, le corps de chauffe est configuré de sorte que le rayonnement de chauffe soit composé d'au moins une longueur d'onde ayant une valeur comprise dans une plage allant de 50 micromètres à 5 millimètres micromètres.

Dans une autre mise en œuvre du dispositif de chauffage radiant, le corps de chauffe comprend une couche support à forte émissivité et au moins une couche électro-conductrice à faible émissivité déposée sur la couche support.

Dans une mise en œuvre supplémentaire du dispositif de chauffage radiant, la couche électro-conductrice est une couche mince réalisée par un procédé de métallisation sous vide.

Dans une mise en œuvre du dispositif de chauffage radiant, la couche électro-conductrice comprend un film réalisé dans une matière plastique ou isolant électrique incorporant au moins un fil électriquement conducteur.

Dans une mise en œuvre du dispositif de chauffage radiant, la couche électro-conductrice présente une émissivité inférieure ou égale à 0,2.

Dans une mise en œuvre du dispositif de chauffage radiant, la couche support présente une émissivité supérieure ou égale à 0,9.

Dans une mise en œuvre du dispositif de chauffage radiant, la couche support est réalisée dans un matériau présentant une conductivité électrique inférieure ou égale à 10 puissance 17 S/m.

Dans une mise en œuvre du dispositif de chauffage radiant, la couche support comporte au moins une paroi en verre plane sur laquelle la couche électro-conductrice est formée.

Dans une mise en œuvre du dispositif de chauffage radiant, le dispositif de chauffage radiant comprend une sonde de température permettant de déterminer une température au niveau d'une surface d'appui sur laquelle un porcelet repose durant son exposition au rayonnement de chauffe et une unité de pilotage permettant de piloter l'alimentation électrique du corps de chauffe par la source d'alimentation électrique de manière à asservir la température déterminée par la sonde de température en fonction d'une température de consigne.

Dans une mise en œuvre du dispositif de chauffage radiant, la sonde de température appartient au groupe comprenant un thermocouple et un thermomètre laser.

Dans une mise en œuvre du dispositif de chauffage radiant, l'unité de pilotage permet d'ajuster la température de consigne, notamment en fonction de l'âge du porcelet exposé au rayonnement de chauffe.

Dans une mise en œuvre du dispositif de chauffage radiant, le dispositif de chauffage radiant comprend une source lumineuse indépendante du corps de chauffe et configurée pour émettre un rayonnement d'éclairage distinct du rayonnement de chauffe apte à éclairer au moins tout ou partie du porcelet sans le chauffer, le rayonnement d'éclairage étant composé d'au moins une longueur d'onde ayant une valeur comprise dans une plage allant de 380 à 750 nanomètres.

Dans une mise en œuvre du dispositif de chauffage radiant, la source lumineuse comprend au moins une diode électroluminescente.

Un avantage de ce dispositif de chauffage est qu'il permet d'obtenir une vasodilatation dans les muscles des animaux dans une profondeur de l'ordre de 4 cm.

Il permet également d'obtenir une stimulation immunitaire.

Un autre avantage de cette technologie est qu'il permet d'obtenir une diminution des inflammations musculaire des porcs.

La source de chaleur des infrarouges long étant d'une surface beaucoup plus grande que celle d'une lampe, les animaux ne se battent pas pour être au chaud, les portées sont donc plus homogènes et les blessures plus rares.

Il est également proposé une niche pour élevage de porcelets comprend un boitier délimitant une ouverture d'accès à l'intérieur du boitier et dans laquelle le dispositif de chauffage radiant forme au moins en partie une paroi mobile de la niche configurée pour varier entre une première configuration dans laquelle la paroi mobile obture l'ouverture d'accès et une deuxième configuration dans laquelle la paroi mobile ouvre tout ou partie de l'ouverture d'accès.

### BREVE DESCRIPTION DES DESSINS

L'invention sera bien comprise à l'aide de la description qui suit de modes particuliers de réalisation de l'invention donnés à titre d'exemples non limitatifs et représentés sur les dessins annexés, dans lesquels :
[Fig. 1] est une vue schématique en coupe d'un exemple de dispositif de chauffage radiant, adapté à un élevage porcin, selon l'invention,
[Fig. 2] est une vue schématique en coupe d'un exemple d'un mode de réalisation de dispositif de chauffage radiant, adapté à un élevage porcin selon l'invention,

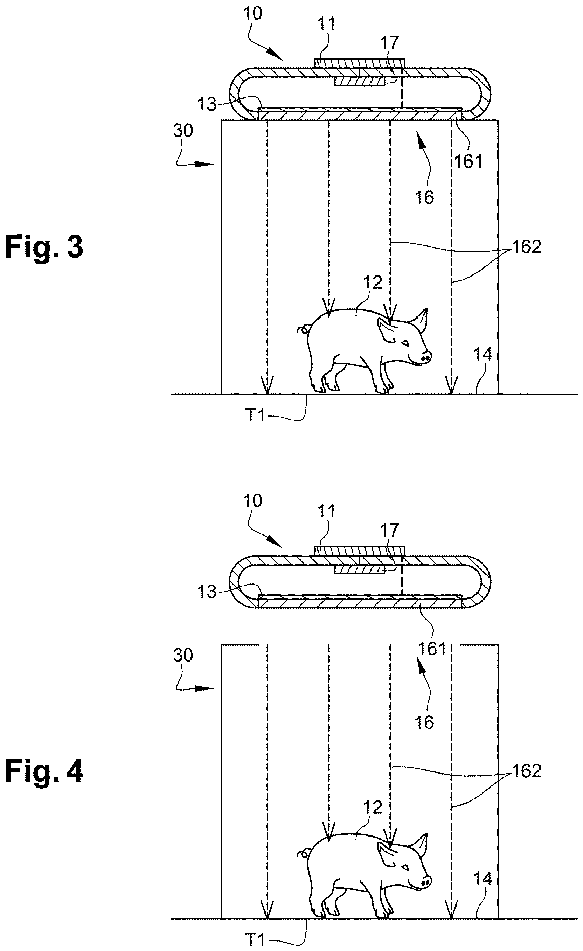

[Fig. 3] est une vue schématique en coupe de la première configuration d'une paroi mobile d'une niche contenant un dispositif de chauffage radiant adapté à un élevage porcin selon l'invention,
[Fig. 4] est une vue schématique en coupe de la deuxième configuration d'une paroi mobile d'une niche contenant un dispositif de chauffage radiant adapté à un élevage porcin selon l'invention,
[Fig. 5] est une vue schématique en coupe de la configuration en post sevrage.

### EXPOSE DETAILLE DE MODES DE REALISATION PARTICULIERS

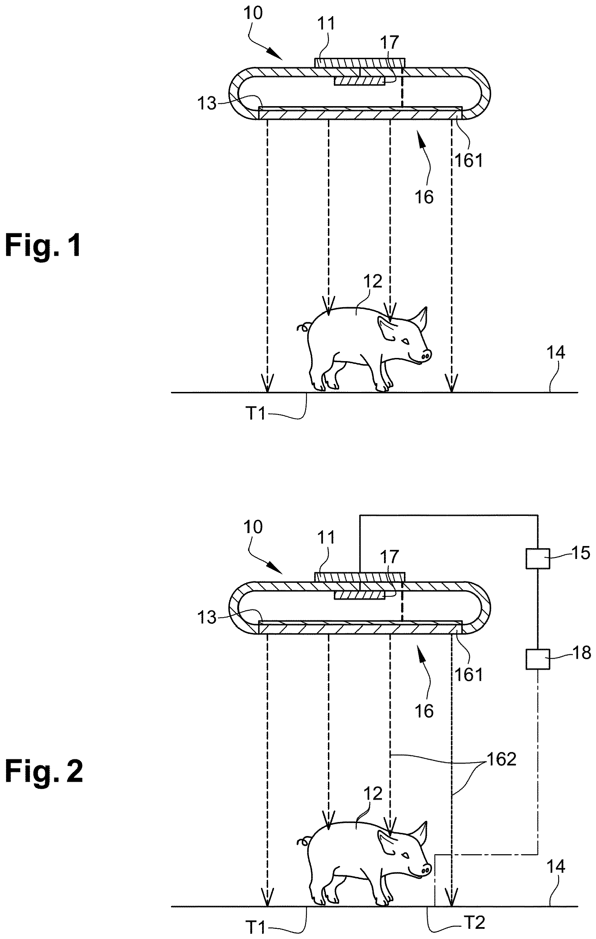

En référence aux figures 1 à 2 annexées telles que présentées sommairement ci-dessus, l'invention concerne essentiellement un dispositif de chauffage radiant 10 adapté à un élevage porcin, notamment pour un élevage de porcelets 12. Le dispositif de chauffage radiant 10 comprend un corps de chauffe 16 configuré pour être raccordé à une source d'alimentation électrique 11. Le corps de chauffe 16 est apte à émettre un rayonnement de chauffe 162 situé au moins en partie dans le domaine infrarouge long lorsqu'il est alimenté en électricité par la source d'alimentation électrique 11. Cette émission du rayonnement de chauffe 162 se pratique selon un champ sensiblement directionnel dirigé selon une direction principale, le rayonnement de chauffe 162 ayant la faculté de chauffer l'intérieur de la chair d'un porcelet 12 au moins en partie positionné dans le champ du rayonnement de chauffe 162.

Par le terme « sensiblement », on entend « à plus ou moins 10° prés ».

Le dispositif de chauffage radiant 10 décrit ici présente l'avantage de pouvoir chauffer de façon différenciée un porcelet 12 et la truie autour de laquelle il évolue. Ainsi, le porcelet 12 peut être réchauffé alors que la truie reste à une température plus fraîche. Un autre avantage réside dans la capacité à chauffer l'intérieur de la chair du porcelet 12, ce qui permet d'optimiser le taux de conversion autrement appelé indice de consommation de nourriture en engraissage car la nourriture ingérée par le porcelet 12 n'est pas ou peu utilisée pour se réchauffer mais directement pour se transformer en viande.

Dans un mode de réalisation particulier, le corps de chauffe 16 du dispositif de chauffage radiant 10 est configuré de sorte que le champ du rayonnement de chauffe 162 est contenu dans un angle d'émission ayant une valeur de 60° par exemple à partir du bord du corps de chauffe. Un tel angle d'émission faible est avantageux pour favoriser une sélectivité de chauffage accrue.

Dans un mode de réalisation particulier, le corps de chauffe 16 du dispositif de chauffage radiant 10 est configuré de sorte que le rayonnement de chauffe 162 est composé d'au moins une longueur d'onde ayant une valeur comprise dans une plage allant de 50 micromètres à 5 millimètres. Ceci est avantageux car ces longueurs d'ondes pénètrent facilement dans la chair du porcelet 12 et permettent de chauffer l'intérieur de sa chair sans pour autant chauffer de façon intense sa peau en surface. Cela permet également de chauffer le porcelet 12 dans l'obscurité ce qui améliore son confort lorsqu'il dort.

Dans un autre mode de réalisation particulier, le corps de chauffe 16 comprend une couche support 161 à forte émissivité, c'est-à-dire ici supérieure à 0,85 et préférentiellement supérieure à 0,9, et au moins une couche électro-conductrice 13 à faible émissivité, c'est-à-dire ici inférieure à 0,2, et déposée sur la couche support 161. L'émissivité s'entend de la capacité d'un matériau réel à émettre un rayonnement thermique. Elle est évaluée par rapport à celle du corps noir. Ce dernier est un corps purement fictif permettant d'obtenir les lois de base du rayonnement thermique. Il décrit un objet idéal dont le spectre électromagnétique ne dépend que de sa température, c'est-à-dire, un objet qui réémet la totalité de son énergie à toutes les longueurs d'ondes. Les objets réels, eux, réémettent une quantité d'énergie radiative toujours inférieure à celle d'un corps noir à la même température. L'émissivité d'une surface représente le rapport entre la quantité d'énergie émise par la surface et l'énergie émise par un corps noir porté à la même température. L'émissivité renseigne donc sur l'aptitude d'un matériau à émettre un rayonnement, ici infrarouge. L'émissivité est donc sans unité et comprise entre 0 et 1 (1 étant la valeur pour un corps noir parfait).

La couche support 161 est réalisée par exemple dans un matériau peu conducteur, voire isolant électriquement, comme du verre ou de la céramique. Préférentiellement, la couche support 161 est résistante aux chocs notamment thermiques et physiques et comprend un verre thermiquement résistant, comme par exemple un borosilicate ou une vitrocéramique.

Dans un mode de réalisation particulier, la couche support 161 comporte au moins une paroi en verre plane sur laquelle la couche électro-conductrice 13 est formée. La paroi en verre plane permet d'améliorer le renvoi vers le porcelet 12 des rayonnements infra-rouges générés directement ou indirectement par le porcelet 12 après réflexion sur la paroi plane. La paroi plane permet en outre d'obtenir avantageusement un flux de rayonnement directif vers le porcelet 12.

Dans un exemple, la couche support 161 est réalisée dans un matériau présentant une conductivité électrique inférieure ou égale à 10 puissance 17 S /m. Ceci permet notamment de générer des puissances surfaciques comprises entre 150W/m² et 4000 W/m².

Dans un autre mode de réalisation, la couche électro-conductrice 13 est une couche mince réalisée par un procédé de métallisation sous vide. Les procédés de métallisation sous vide utilisés peuvent être par exemple l'évaporation ou le dépôt assisté par plasma ou le dépôt par magnétron. L'épaisseur de la couche électro-conductrice 13 est comprise entre 500 et 7000 angstrôms. Elle peut être composée de plusieurs couches superposées d'un ou plusieurs matériaux conducteurs. Le dépôt en couche mince permet notamment d'obtenir l'émission d'un flux de rayonnement homogène. Des matériaux pour réaliser cette couche sont par exemple, du chrome ou de l'oxyde de chrome ou un alliage de nickel et de chrome. La couche électro-conductrice 13 peut, de par sa nature métallique, être réflectrice ce qui est avantageux pour rediriger le rayonnement infra-rouge induit par le porcelet 12, et les réflexions diverses, vers le porcelet 12. Avantageusement, cette architecture permet d'obtenir une efficacité énergétique élevée et permet donc des économies substantielles à l'utilisation.

Dans un exemple particulier non représenté, la couche électro-conductrice 13 comprend un film réalisé dans une matière plastique ou isolant électrique incorporant au moins un fil électriquement conducteur. Ce film peut être collé directement sur la face arrière de la couche support 161.

Dans un mode de réalisation particulier et avantageux illustré sur la figure 2, le dispositif de chauffage radiant 10 comprend une sonde de température 18 permettant de déterminer une température T1 au niveau d'une surface d'appui 14 sur laquelle un porcelet 12 repose durant son exposition au rayonnement de chauffe 162. La surface d'appui 14 est par exemple le sol. La sonde de température 18 peut par exemple être un thermocouple ou un thermomètre laser. Le dispositif de chauffage radiant 10 comprend également une unité de pilotage 15 permettant de piloter l'alimentation électrique du corps de chauffe 16 par la source d'alimentation électrique 11. De cette façon, il est possible d'asservir la température T1 déterminée par la sonde de température 18 en fonction d'une température de consigne T2. La température de consigne T2 peut être comprise avantageusement entre 38 et 24°C.

Dans un exemple de ce mode de réalisation, l'unité de pilotage 15 permet d'ajuster la température de consigne T2, notamment en fonction de l'âge du porcelet 12 exposé au rayonnement de chauffe 162. En effet, les besoins en chauffage évoluent tout au long de la vie du porcelet 12. Ainsi, une baisse de chauffage d'un degré par semaine peut être nécessaire et implémentée jusqu'à obtenir par exemple 24°C.

Dans tous les modes de réalisations, le dispositif de chauffage radiant 10 comprend une source lumineuse 17 indépendante du corps de chauffe 16. La source lumineuse 17 est configurée pour émettre un rayonnement d'éclairage distinct du rayonnement de chauffe 162. Elle est également apte à éclairer au moins tout ou partie du porcelet 12 sans le chauffer. Le rayonnement d'éclairage est notamment composé d'au moins une longueur d'onde ayant une valeur comprise dans une plage allant de 380 à 750 nanomètres. Le rayonnement d'éclairage ainsi produit permet d'éclairer par une lumière visible le porcelet 12, par exemple en reproduisant au moins en partie l'éclairage naturel du soleil afin d'améliorer le bien-être du porcelet 12.

La source lumineuse 17 peut comprendre au moins une diode électroluminescente. Ceci est avantageux pour permettre de réduire les coûts d'exploitation et/ou permettre également de reproduire le plus fidèlement possible le spectre lumineux naturel. Les diodes électroluminescentes ont également l'avantage de ne pas ou peu chauffer, ce qui permet d'épargner le chauffage de la truie qui serait proche du porcelet 12.

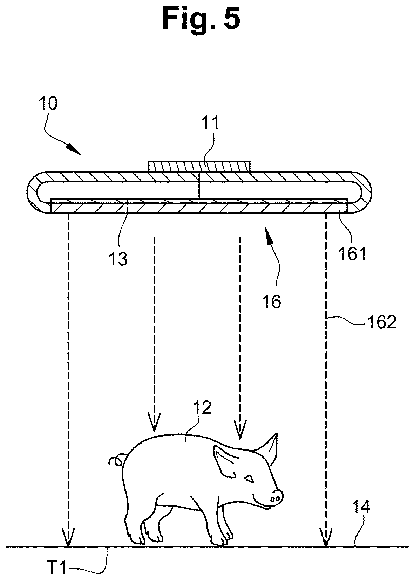

Dans un exemple illustré sur la figure 5 préférentiellement adapté au chauffage du porcelet pendant son adolescence c'est-à-dire en post sevrage, le dispositif de chauffage radiant 10 a une épaisseur totale réduite inférieure à 4 cm. Ceci permet d'avoir des dimensions du dispositif de chauffage radiant 10 supérieure au mètre carré.

L'architecture globale du dispositif de chauffage radiant 10 permet avantageusement que les matériaux utilisés soient recyclables ou recyclés lors de leur emploi dans le dispositif de chauffage radiant 10. Ainsi, un tel dispositif de chauffage radiant 10 permet de répondre aux critères ETV de l'anglais European Technology Vérification.

Un tel dispositif de chauffage radiant 10 est également avantageusement durable et robuste dans son utilisation.

L'invention concerne également une niche 30 pour l'élevage de porcelets 12 comprenant un dispositif de chauffage radiant 10 tel que décrit précédemment. Une telle niche pourrait avantageusement permettre d'augmenter le confort et le bien-être des porcelets 12, favorisant en outre une optimisation du taux de conversion en viande.

Dans un exemple, la niche 30 comprend un boitier délimitant une ouverture d'accès à l'intérieur du boitier. Le dispositif de chauffage radiant 10 forme alors au moins en partie une paroi mobile de la niche 30. La paroi mobile de la niche 30 est configurée pour varier entre une première configuration dans laquelle la paroi mobile obture l'ouverture d'accès et une deuxième configuration dans laquelle la paroi mobile ouvre tout ou partie de l'ouverture d'accès faisant par exemple rentrer de l'air frais ou baisser la température. Cette architecture mobile permet avantageusement de contrôler la température à l'intérieur de la niche 30 par exemple en alternant la première configuration et la deuxième configuration et ainsi permettre un meilleur bien-être du porcelet 12.

Bien entendu, l'invention n'est pas limitée aux modes de réalisation représentés et décrits ci-avant, mais en couvre au contraire toutes les variantes et combinaisons.

## Revendications

1. Dispositif de chauffage radiant (10) adapté à un élevage porcin, notamment pour un élevage de porcelets (12), le dispositif de chauffage radiant (10) comprenant un corps de chauffe (16) configuré pour être raccordé à une source d'alimentation électrique (11) et pour émettre un rayonnement de chauffe (162) au moins en partie dans le domaine infrarouge lorsque le corps de chauffe (16) est alimenté en électricité par la source d'alimentation électrique (11), l'émission du rayonnement de chauffe (162) se pratiquant selon un champ sensiblement directionnel dirigé selon une direction principale, le rayonnement de chauffe (162) ayant la faculté de chauffer l'intérieur de la chair d'un porcelet (12) au moins en partie positionné dans le champ du rayonnement de chauffe (162).

2. Dispositif de chauffage radiant (10) selon la revendication 1, dans lequel le corps de chauffe (16) est configuré de sorte que le champ du rayonnement de chauffe (162) est contenu dans un angle d'émission de 60°.

3. Dispositif de chauffage radiant (10) selon l'une des revendications 1 ou 2, dans lequel le corps de chauffe (16) est configuré de sorte que le rayonnement de chauffe (162) soit composé d'au moins une longueur d'onde ayant une valeur comprise dans une plage allant de 50 micromètres à 5 millimètres micromètres.

4. Dispositif de chauffage radiant (10) selon l'une des revendications 1 à 3, dans lequel le corps de chauffe (16) comprend une couche support (161) à forte émissivité et au moins une couche électro-conductrice (13) à faible émissivité déposée sur la couche support (161).

5. Dispositif de chauffage radiant (10) selon la revendication 4, dans lequel la couche électro-conductrice (13) est une couche mince réalisée par un procédé de métallisation sous vide.

6. Dispositif de chauffage radiant (10) selon la revendication 4, dans lequel la couche électro-conductrice (13) comprend un film réalisé dans une matière plastique ou isolant électrique incorporant au moins un fil électriquement conducteur.

7. Dispositif de chauffage radiant (10) selon l'une des revendications 4 à 6, dans lequel la couche électro-conductrice (13) présente une émissivité inférieure ou égale à 0,2.

8. Dispositif de chauffage radiant (10) selon l'une des revendications 4 à 7, dans lequel la couche support (161) présente une émissivité supérieure ou égale à 0,9.

9. Dispositif de chauffage radiant (10) selon l'une des revendications 4 à 8, dans lequel la couche support (161) est réalisée dans un matériau présentant une conductivité électrique inférieure ou égale à 10 puissance 17 S/m.

10. Dispositif de chauffage radiant (10) selon l'une des revendications 4 à 9, dans lequel la couche support (161) comporte au moins une paroi en verre plane sur laquelle la couche électro-conductrice (13) est formée.

11. Dispositif de chauffage radiant (10) selon l'une des revendications 2 à 5, dans lequel le dispositif de chauffage radiant (10) comprend une sonde de température (18) permettant de déterminer une température (T1) au niveau d'une surface d'appui (14) sur laquelle un porcelet (12) repose durant son exposition au rayonnement de chauffe (162) et une unité de pilotage (15) permettant de piloter l'alimentation électrique du corps de chauffe (16) par la source d'alimentation électrique (11) de manière à asservir la température (T1) déterminée par la sonde de température (18) en fonction d'une température de consigne (T2).

12. Dispositif de chauffage radiant (10) selon la revendication 11, dans lequel la sonde de température (18) appartient au groupe comprenant un thermocouple et un thermomètre laser.

13. Dispositif de chauffage radiant (10) selon l'une des revendications 11 ou 12, dans lequel l'unité de pilotage (15) permet d'ajuster la température de consigne (T2), notamment en fonction de l'âge du porcelet (12) exposé au rayonnement de chauffe (162).

14. Dispositif de chauffage radiant (10) selon l'une des revendications 1 à 13 dans lequel le dispositif de chauffage radiant (10) comprend une source lumineuse (17) indépendante du corps de chauffe (16) et configurée pour émettre un rayonnement d'éclairage distinct du rayonnement de chauffe (162) apte à éclairer au moins tout ou partie du porcelet (12) sans le chauffer, le rayonnement d'éclairage étant composé d'au moins une longueur d'onde ayant une valeur comprise dans une plage allant de 380 à 750 nanomètres.

15. Dispositif de chauffage (10) selon la revendication 14 dans lequel la source lumineuse (17) comprend au moins une diode électroluminescente.

16. Niche (30) pour l'élevage de porcelets (12) comprenant un dispositif de chauffage radiant (10) selon l'une des revendications 1 à 15.

17. Niche (30) selon la revendication 16, dans laquelle la niche (30) comprend un boitier délimitant une ouverture d'accès à l'intérieur du boitier et dans laquelle le dispositif de chauffage radiant (10) forme au moins en partie une paroi mobile de la niche (30) configurée pour varier entre une première configuration dans laquelle la paroi mobile obture l'ouverture d'accès et une deuxième configuration dans laquelle la paroi mobile ouvre tout ou partie de l'ouverture d'accès.
